# EUROPEAN PATENT APPLICATION

(11) **EP 1 630 436 A2**
(43) Date of publication of application: **01.03.2006**
(21) Application number: 05018129.6
(22) Date of filing: 20.08.2005
(51) Int. Cl.: F16D 1/072

(54) **Driveshaft assembly with torque ring coupling**

(30) Priority: 26.08.2004 US 926545
(71) Applicant: American Axle & Manufacturing, Inc., Detroit, MI 48211-1198 (US)
(72) Inventor: Brissette, Ronald, Oxford, Michigan 48371 (US)
(74) Representative: Dreiss, Fuhlendorf, Steimle & Becker

(57) **Abstract**

A driveshaft assembly (10) having a first component (26) defining a bore, a second component (28), which is received in the bore, and a torque ring (30). The torque ring (30) is received in the bore (32) and disposed between the first component (26) to the second component (28). The torque ring (30) includes a plurality of teeth (56) that are at least partially elastically deformed so as to apply a radial load to the first (26) and second components (28) to thereby inhibit relative axial and rotational movement between the first and second components. A method for forming a driveshaft is also provided.

## Description

The present invention relates to driveshaft assemblies, and more particularly to a torque ring coupling for a driveshaft assembly.

In the manufacture of automotive driveshafts, it is commonplace to join components, such as tubing portions to one another or to end components, such as yokes and spline shafts, by welding. While this process has been effective for its intended purpose, several drawbacks have been noted. These drawbacks include, for example, the necessity that the components be made of materials that are compatibly welded to each other, the necessity that the components be machined or formed with fairly close mating tolerances to ensure that proper alignment may be achieved prior to welding, and distortion that may result from the heat that is generated during the welding operation.

Accordingly, there remains a need in the art for an improved device and method for joining components of a drive shaft in a manner that resists both axial loads and relatively high torsional loads, does not generate a large amount of heat that could distort the components, is relatively inexpensive and which may permit the machining of the components to relatively more open tolerances.

In one form, the present teachings provide a driveshaft assembly having a first component defining a bore, a second component, which is received in the bore, and a torque ring. The torque ring is received in the bore and disposed between the first component to the second component. The torque ring includes a plurality of teeth that are at least partially elastically deformed so as to apply a radial load to the first and second components to thereby inhibit relative axial and rotational movement between the first and second components.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
- Figure 1: is a schematic view of an exemplary motor vehicle having a driveshaft assembly constructed in accordance with the teachings of the present invention;
- Figure 2: is a schematic sectional view of a portion of the driveshaft assembly of Figure 1;
- Figure 3: is an illustration of a portion of the driveshaft assembly of Figure 1 showing the torque ring in an end view; and
- Figure 4: is an exploded section view of a portion of the driveshaft assembly of Figure 1.

The following description of the preferred embodiment is merely exemplary in nature and is in no way intended to limit the invention, its application, or uses.

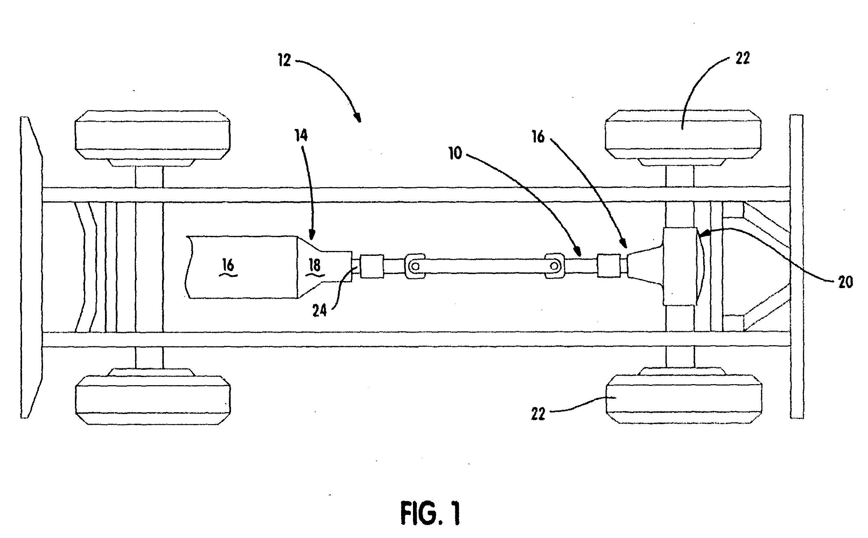

With reference to Figure 1 of the drawings, a driveshaft assembly 10 constructed in accordance with the teachings of the present invention is illustrated in operative association with an exemplary motor vehicle 12. The vehicle 12 further includes a powertrain 14 coupled via the driveshaft assembly 10 to a driveline. The powertrain 14 includes an engine 16 coupled to a transmission 18. The driveline includes a rear axle 20 coupled to a pair of wheels 22. While in the particular example provided the driveshaft assembly 10 is employed within a motor vehicle, it should be appreciated that the driveshaft assembly 10 may be used in various other applications.

In the particular example provided, the engine 16 is mounted in an in-line or longitudinal orientation along the axis of the motor vehicle 12. The output of the engine 16 is coupled via a conventional clutch or torque converter (not specifically shown) to the input of the transmission 18 in order to transmit rotary power thereto. The input of the transmission 18 is commonly aligned with the output of the engine 16 for rotation about a rotary axis. The transmission 18 further includes an output 24 coupled for rotation to the driveshaft assembly 10. Drive torque is transmitted through the driveshaft assembly 10 to the rear axle 20 where it is selectively transferred to the wheels 22 in a conventional and well known manner.

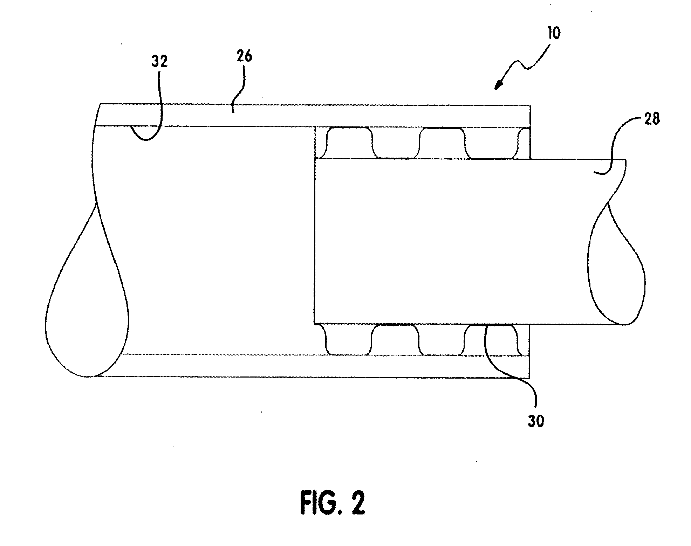

Turning to Figure 2, a portion of the driveshaft assembly 10 is illustrated. The driveshaft assembly 10 includes a first component 26, a second component 28, and a torque ring 30. Generally speaking, the first component 26 and the second component 28 may be located anywhere along the length of the driveshaft assembly 10 including the ends thereof. Moreover, in the particular example provided, the portion of the driveshaft assembly 10 that is shown illustrates a tubing to tubing interface. However, it should be appreciated that the torque ring of the present invention may be employed to couple various other components of the driveshaft assembly 10, such as, the tubing to an end component (e.g., yoke, spline shaft) or a deadener to a slip yoke.

In the particular example provided, the first component 26 is a shaft that defines a generally cylindrical inner bore 32. The second component 28 is generally cylindrical in shape and is received into the inner bore 32 of the first component 26. The torque ring 30 is also received within the inner bore 32 and is located between the first component 26 and the second component 28. Placement of the torque ring 30 in this manner compresses and deforms the torque ring 30 in an at least partially elastic manner such that radial forces are applied to both the first component 26 and the second component 28. This radial force is sufficiently high as to permit the transmission of torque between the first and second components 26 and 26 without slippage of the torque ring 30, as well as to sufficiently engage the first and second components 26 and 28 as to resist or inhibit relative axial movement therebetween.

It will be appreciated that the first and second components 26 and 28 may be formed from any desired materials and that welding compatibility is not necessary. Accordingly, it is possible with use of the torque ring of the present invention to join steel and aluminum components to one another in an accurate yet low cost manner.

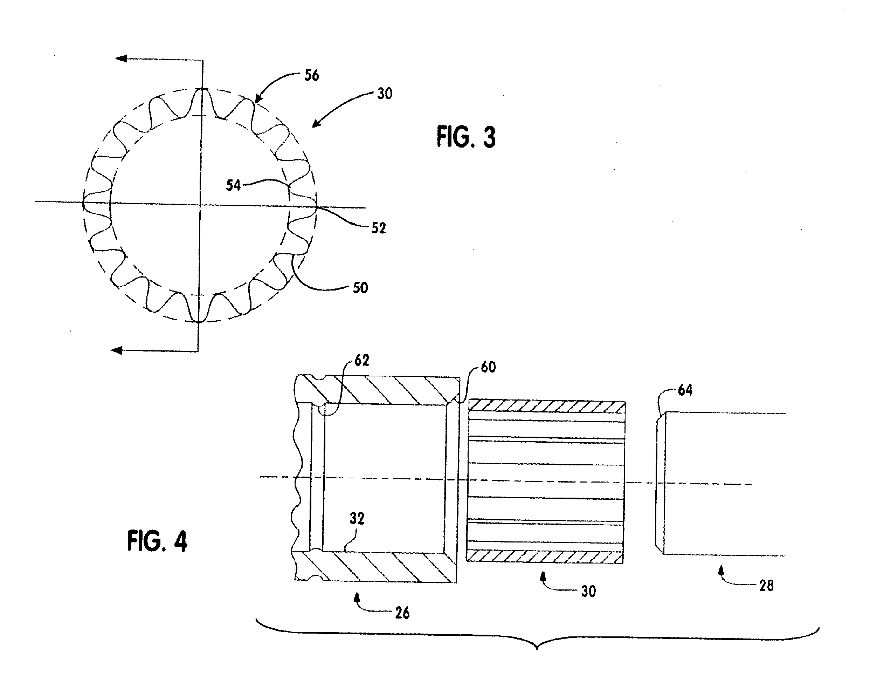

With additional reference to Figures 3 and 4, the torque ring 30 is an annular structure having a wall member 50 that defines an outer surface 52 and an inner surface 54. The wall member 50 is illustrated to be formed with teeth 56 that extend about the torque ring 30 in a sinusoidally-undulating manner but it will be appreciated that other wave forms or types, which may or may not repeat, may be employed in the alternative. In a prior-to-assembly state, the outer surface 52 of the torque ring 30 defines an outer diameter that is relatively larger than the inner diameter of the bore 32 in the first component 26, and the inner surface 54 of the torque ring 30 defines an inner diameter that is relatively larger than the outer diameter of the first component 26.

To facilitate assembly, the first component 26 may include a flared lead in 60, which may be adapted to guide the torque ring 30 into the bore 32, and/or a stop member 62, which may be adapted to prevent the torque ring 30 from being pushed into the bore 32 beyond a predetermined position. The second component 28 may include a tapered shaft lead section 64, which may be adapted to guide the torque ring 30 onto the second component 28. The torque ring 30 may be initially installed to the bore 32 and thereafter the second component 28 may be received into the torque ring 30. Alternatively, the torque ring 30 may be initially installed to the second component 28 and thereafter the second component 28 and the torque ring 30 inserted into the bore 32. Also alternatively, the torque ring 30 may be installed substantially simultaneously into the bore 32 and onto the second component 28.

During installation, the outer and inner surfaces 52 and 54 deform at least partially elastically in a manner which permits the torque ring 30 to generate the radial forces that retain the assembly together. Significantly, the undulating surfaces of the torque ring 30 permit the bore 32 and the second component 28 to be formed to relatively more open tolerances as compared to process that employ welding to retain and transmit torsional loads between the components. Moreover, precision grinding is not necessary, so that turned (or in some situations, as-cast) components may be mated to one another.

The description of the invention is merely exemplary in nature and, thus, variations that do not depart from the gist of the invention are intended to be within the scope of the invention. Such variations are not to be regarded as a departure from the spirit and scope of the invention.

## Claims

1. A driveshaft assembly comprising:
a first component defining a bore;
a second component received in the bore; and
a torque ring received in the bore and disposed between the first component to the second component, the torque ring comprising a plurality of teeth that are at least partially elastically deformed so as to apply a radial load to the first and second components to thereby inhibit relative axial and rotational movement between the first and second components.

2. The driveshaft assembly of Claim 1, wherein a portion of the second component that is engaged to the torque ring is cylindrical in shape.

3. The driveshaft assembly of Claim 1, wherein a portion of the bore in which the torque ring is disposed has a circular cross section.

4. The driveshaft assembly of Claim 1, wherein the teeth extend longitudinally along the torque ring.

5. The driveshaft assembly of Claim 4, wherein the teeth are generally parallel a longitudinal axis of the torque ring.

6. The driveshaft assembly of Claim 1, wherein the teeth define a sinusoidally-undulating profile.

7. The driveshaft assembly of Claim 1, wherein one of the first and second components is a tube and the other one of the first and second components is a yoke or a spline shaft.

8. The driveshaft assembly of Claim 1, wherein the teeth engage both the first component and the second component.

9. A method for fabricating a driveshaft assembly comprising:
providing a torque ring, the torque ring being generally ring-shaped and having a plurality of teeth;
providing a first component with a shaft end;
providing a second component with a bore; and
assembling the torque ring, the first component and the second component such that the torque ring is disposed about the shaft end and the torque ring is received into the bore, the teeth being at least partially elastically deformed so as to inhibit relative axial and rotational movement between the first and second components.

10. The method of Claim 9, wherein assembling the torque ring, the first component and the second component comprises:
installing the torque ring to the shaft end; and
simultaneously installing both the shaft end and the torque ring into the bore.

11. The method of Claim 9, wherein assembling the torque ring, the first component and the second component comprises:
placing the torque ring between the shaft end and the second component;
applying a force to at least one of the first and
second components to simultaneously install the torquering onto the shaft end and into the bore.

12. The method of Claim 9, wherein the teeth define a sinusoidally-undulating profile.

13. A driveshaft assembly comprising:
a first component having a generally cylindrical shaft end;
a second component defining a generally cylindrical bore;
a torque ring having a plurality of teeth, the torque ring being received in the bore and engaged to the shaft end to thereby inhibit relative axial and rotational movement between the first and second components.

14. The driveshaft assembly of Claim 13, wherein the teeth define a sinusoidally-undulating profile.

15. The driveshaft assembly of Claim 13, wherein one of the first and second components is a tube and the other one of the first and second components is a yoke or a spline shaft.

16. The driveshaft assembly of Claim 13, wherein the teeth extend longitudinally along the torque ring.

17. The driveshaft assembly of Claim 16, wherein the teeth are generally parallel a longitudinal axis of the torque ring.
